# EUROPEAN PATENT APPLICATION

(11) **EP 2 814 099 A1**
(43) Date of publication of application: **17.12.2014**
(21) Application number: 13171699.5
(22) Date of filing: 12.06.2013
(51) Int. Cl.: H01M 8/12, H01M 4/88, H01M 4/90, H01M 8/24

(54) **Electrochemical cell**

(71) Applicant: Topsøe Fuel Cell A/S, 2800 Kgs. Lyngby (DK)
(72) Inventor: PRIMDAHL, Søren, 3550 Slangerup (DK); KJØLBY, Sif, 4300 Holbæk (DK); KÜNGAS, Rainer, 2300 Copenhagen S (DK); KLEMENS HANSEN, Karsten, 2625 Vallensbæk (DK); RAHBEK, Uffe, 4623 Lille Skensved (DK)
(74) Representative: Haldor Topsøe A/S

(57) **Abstract**

An electrochemical cell with a substantially gas-tight electrolyte, designed for use between two gases, one of which is more reducing than the other (oxidant) gas, comprises a reducing side support structure containing Ni/NiO and stabilized zirconia, said structure having a thickness after heating of at least 100 µm, a reducing side electrode structure with a thickness after heating of at least 5 µm, an electrolyte structure, which consists of at least one layer and which is substantially gas-tight after heating, an oxidant side electrode first material having a thickness after heating of at least 10 µm, and an oxidant side electrode second material or group of materials having some degree of electronic conductivity.

## Description

The present invention relates to an electrochemical cell, especially a solid oxide fuel cell, which is suitable for low cost manufacture. More specifically the invention relates to a new cell concept, which is an electrochemical cell with a substantially gas-tight electrolyte, said electrolyte being designed for use between two gases, one of which is more reducing than the other (oxidant) gas.

This new cell concept constitutes a novel cell design consisting of an anode support, the anode, the electrolyte and the cathode. There is no barrier layer between the electrolyte and the cathode.

A solid oxide fuel cell (SOFC) is a fuel cell using a solid oxide as electrolyte material having ionic conductivity. The fuel cell generally has an operating temperature as high as around 1000°C, although lately there has been developed cells having an operating temperature up to only 800°C. The SOFC consists of a fuel electrode, i.e. an anode, and an air electrode, i.e. a cathode, with an electrolytic material sandwiched in between the electrodes, thereby making up a single cell as a three-layer unit consisting of fuel electrode/electrolyte/air electrode.

Solid oxide fuel cells have gained widespread recognition as a viable high temperature fuel cell technology. Since it has no liquid electrolyte, any metal corrosion and electrolyte management problems, which are typically associated with the use of liquid electrolytes, are avoided. In solid oxide fuel cells the electrolyte is made primarily from solid ceramic materials, which are capable of surviving the high temperature environment typically encountered during operation of SOFCs. The operating temperature, which is well over 600°C, allows internal reforming, promotes rapid kinetics with the use of non-precious materials and produces high-quality by-product heat. However, the high working temperature of the SOFC imposes stringent requirements on its fabrication materials. Because of the high operating temperatures of conventional SOFCs (approximately 600 to 1000°C), the materials used to fabricate the respective cell components are limited by chemical stability in oxidizing and reducing environments, chemical stability of contacting materials, conductivity and thermo-mechanical compatibility.

The SOFC electrodes are typically prepared from a composite of an electronically conductive material and the electrolyte oxide. For example with electrolytes made from yttria-stabilised zirconia (YSZ), the conventional anode is a Ni-YSZ, ceramic-metallic (cermet) composite. In addition to maintaining porosity in the anode and providing a CTE (coefficient of thermal expansion) match with the electrolyte, the YSZ in the cermet extends the region into which ions can migrate, increasing the length of the three-phase boundary (TPB).

A material commonly used for SOFC cathodes is a composite of YSZ with Sr-doped LaMnO₃ (LSM). Just as with the Ni cermets, YSZ in the LSM-YSZ composite provides a pathway for ion migration in order to extend the TBP region within the cathode. Great care usually must be taken in the preparation of oxide composites, like that of LSM and YSZ, to avoid solid-state reactions that lead to insulating phases. In general the two oxide phases are prepared separately, physically mixed and then calcined.

Various cells of this type already exist. Thus, US 6,958,196 describes a porous cathode for a solid oxide fuel cell comprising a porous ceramic matrix and at least an electronically conducting material dispersed at least partially within the pores of the porous ceramic matrix, wherein the porous ceramic matrix includes a plurality of pores having an average pore size of at least about 0.5 µm. The porous ceramic matrix can be selected from the group consisting of YSZ, Gd- and Sm-doped ceria (10 to 100 wt%), Sc-doped ZrO₂ (up to 100 wt%), doped LaGaMnOₓ, and mixtures thereof. The porous ceramic matrix can be YSZ, and the electronically conducting material is selected from the group consisting of Sr-doped LaMnO₃, LaFeO₃, and LaCoO₃, Ag, and mixtures thereof. However, this patent does not describe multilayer tape-casting and the use of scandia-stabilised zirconia (ScSZ). US2006/0113034 describes an electrochemical cell that includes a first layer including a porous ceramic layer having pore channels. The pore channels can be infiltrated with a conductive coating, and can be sufficiently large for a majority of the pore channels to remain open after applying the conductive coating. The cell can include a second layer on the first layer, the second layer including a porous interlayer. The first and second layer can function as an anode or a cathode. The cell can include a third layer including a ceramic membrane, and a cathode positioned on the third layer. In US 2008/0102337, a process for producing a cell for solid oxide fuel cells is disclosed, said process comprising a step for obtaining an electrolyte substrate in which a porous electrolyte layer is formed by applying a slurry containing an electrolyte substance powder and a pore-forming agent to the surface of an electrolyte substrate and burning the electrolyte substrate, and a step for obtaining an electrolyte substrate in which a porous electrolyte layer filled with an electrode substance (electrode substance-filled porous electrolyte layer) and an electrode layer are formed by applying a slurry onto the surface of the porous electrolyte layer of the electrolyte substrate on which the porous electrolyte layer is formed, and burning the electrolyte substrate. This prior art describes infiltration with cathode nanoparticles.

US2008/0090127 relates to a high performance ceramic anode which increases the flexibility in the types of fuels that may be used with the anode. This prior art further relates to a high-performance, direct-oxidation SOFC utilizing the anodes, providing improved electrocatalytic activity and redox stability. The SOFCs are capable of use with strategic fuels and other hydrocarbon fuels. In their preparation, a ceramic material is infiltrated into the anode. Finally, EP 1 344 271 relates to a solid oxide fuel cell, which comprises a solid electrolyte consisting of an electronic insulator which allows transfer of anions, a ceramic-metal composite anode and a cathode. In this SOFC, the fuel is a sulfur-containing hydrocarbon and the anode is a porous cermet infiltrated with copper.

The purpose underlying the present invention has been to develop a novel cell type characterized by high durability, low cost and improved robustness. This is obtained by the electrochemical cell according to the invention, which is a cell with a substantially gas-tight electrolyte, designed for use between two gases, one of which is more reducing than the other (oxidant) gas. The electrochemical cell according to the invention comprises:
- a reducing side (i.e. anode) support structure containing Ni/NiO and stabilized zirconia, said structure having a thickness after heating of at least 100 µm, preferably at least 200 µm,
- a reducing side (i.e. anode) electrode structure, said structure having a thickness after heating of at least 5 µm, preferably 5-30 µm, more preferably 10-20 µm,
- an electrolyte structure, which consists of at least one layer and which is substantially gas-tight after heating,
- an oxidant side electrode (i.e. cathode) first material having a thickness after heating of at least 10 µm, preferably 10-50 µm, more preferably 15-40 µm and most preferably 20-40 µm, and
- an oxidant side electrode (i.e. cathode) second material or group of materials having some degree of electronic conductivity.

Half the cell of the novel electrochemical cell according to the invention is prepared by steps including tape casting of the anode support, multilayer tape casting of anode and electrolyte, lamination and sintering.

The electrochemical cell according to the invention has a new cathode composition consisting of a porous, pre-sintered YSZ cathode backbone containing lanthanum-strontium-ferrite (LSF) obtained from La, Sr and Fe nitrates as active cathode material. A cathode backbone must be easy to infiltrate, and therefore it should have porosity above 50% with large connected pores, which would also secure a fast gas-phase transport. On the other hand, high performance would require smaller pores and a high pore surface area. It has turned out that a porous cathode backbone can be made by tape casting, whereby a reasonable pore structure and a uniform thickness is obtained.

One of the reasons for focusing on this new cathode material is that nitrates are cheaper than the commonly used per-ovskite materials. Further, no barrier layer is needed because of the low cathode sintering temperature. Another reason is that the thermal expansion coefficient (TEC) of the cathode equals that of the electrolyte, which will improve the durability. Furthermore, less cathode material will be needed to obtain the same performance.

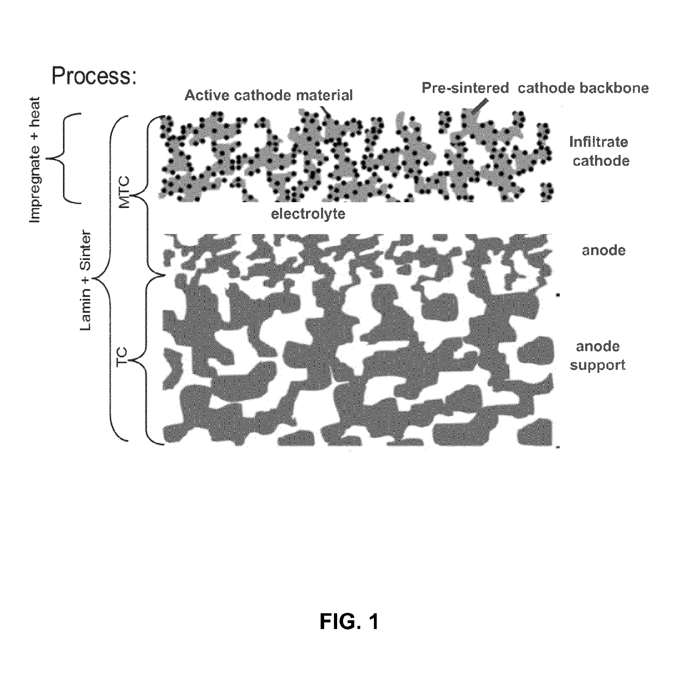

The appended fig. 1 shows the structure of the novel electrochemical cell according to the invention, especially the cathode material with the porous cathode backbone. It also outlines the processes leading to the intended structure, where TC indicates tape casting and MTC indicates multilayer tape casting.

Thus, half the cell of the electrochemical cell according to the invention can be prepared by a process including the following steps:
(a) tape casting of several layers, either together or by repeated procedures,
(b) laminating with the ultimate layer, which is either the support or the cathode backbone (originating from a standard tape casting),
(c) sintering of the four layers of the cell in one sintering procedure,
(d) one or more infiltrations with salt solutions or molten salts to obtain the cathode material and
(e) optionally a final heat treatment at a temperature above the operational temperature.

This process has been created with a view to the following desirable process requirements: The process should be as economically advantageous as possible, involving as little handling as possible. Further, it should be possible to up-scale the processing as needed, and finally no extra high temperature sintering (at 1250°C) should be necessary. This can be obtained by tape casting and co-sintering with the half cell.

To obtain the optimal porous cathode backbone, a number of potential pore-forming materials have been examined, including graphite flakes, fine graphite, synthetic graphite, carbon black polystyrene beads and polymethyl methacrylate (PMMA) beads. It has turned out that by using PMMA beads plus fine graphite, a thickness of around 40 µm and an open porosity around 45% can be obtained.

Obtaining the cathode material necessitates one or more infiltrations with salt solutions or molten salts. This procedure is dealt with in a separate, co-pending patent application.

In the electrochemical cell according to the invention, the layers, with the exception of the oxidant side electrode second material, are preferably assembled in a common green state structure, which is fired to comprise a ceramic component including a substantially gas-tight electrolyte. Further, the one or more second materials of the oxidant side electrode is/are subsequently introduced in the fired first oxidant side electrode material by one or more cycles of a liquefied penetrant method followed by a drying and/or decomposition step.

Furthermore, support is established in one or more layers in the green state by tape casting or by using a slot die system.

In the electrochemical cell according to the invention, the reducing side electrode can be established by either tape casting or by using a slot die system or a print process. Also, at least one of the electrolyte layers can be established in the green state by either tape casting or by using a spray process, a slot die system or a print process.

The oxidant side first material can be established in the green state by either tape casting or by using a spray process, a slot die system or a print process. Said oxidant side first material preferably consists of doped ZrO₂ / YSZ / ScSZ / CeO₂ doped or co-doped with Gd, Sm or Tb. An open porous structure can be obtained in the oxidant side first material through addition of one or more pore-forming materials or by pre-calcination of one or more fractions of the material.

The oxidant side first material will typically have a specific internal surface of at least 5 m² per m² electrolyte area, preferably more than 7 m² and most preferably more than 10 m² per m² electrolyte area. Further, the oxidant side first material will typically have an average pore size of 0.5-5 µm, preferably 0.5-3 µm and most preferably 1-3 µm.

The porosity of the oxidant side second layer is preferably open and in the order of 20-70% before the penetration process and 10-50% after the penetration and heat treatment processes.

The first electrolyte layer preferably contains doped ZrO₂ / YSZ / ScSZ, whereas it is preferred that the second electrolyte layer contains CeO₂ or doped CeO₂. If doped, the CeO₂ is preferably doped or co-doped with Gd, Sm or Tb.

In the electrochemical cell according to the invention, it is preferred that the electrolyte constitutes a graded composition between two materials, preferably doped ZrO₂ and doped CeO₂, no matter if the grading is created by the forming process or by a thermal treatment, i.e. sintering.

In the preparation of the electrochemical cell according to the invention, at least two or three layers are produced together by multilayer tape casting or by a slot die process. It is preferred that at least the electrolyte layer(s) and the reducing side electrode are established by methods involving multilayer tape casting or lamination. Especially it is preferred that the assembly of at least two parts of the specified layers is combined with lamination.

Further, in the preparation of the electrochemical cell according to the invention, it is preferred that two or more pore-forming materials are used, one having a typical diameter primarily in the size range from 0.5 to 10 µm, preferably from 0.5 to 5 µm, and another having a typical diameter primarily below 2 µm, preferably around 1 µm.

The electrochemical cell according to the invention can be mounted in a stack assembly manifolding two different atmospheres to the two electrodes. Said stack assembly has an interconnect structure allowing passage of current through the cell.

## Claims

1. Electrochemical cell with a substantially gas-tight electrolyte, designed for use between two gases, one of which is more reducing than the other (oxidant) gas, said electrochemical cell comprising:
- a reducing side support structure containing Ni/NiO and stabilized zirconia, said structure having a thickness after heating of at least 100 µm, preferably at least 200 µm,
- a reducing side electrode structure, said structure having a thickness after heating of at least 5 µm, preferably 5-30 µm, more preferably 10-20 µm,
- an electrolyte structure, which consists of at least one layer and which is substantially gas-tight after heating,
- an oxidant side electrode first material having a thickness after heating of at least 10 µm, preferably 10-50 µm, more preferably 15-40 µm and most preferably 20-40 µm, and
- an oxidant side electrode second material or group of materials having some degree of electronic conductivity.

2. Electrochemical cell according to claim 1, wherein the layers, with the exception of the oxidant side electrode second material, are assembled in a common green state structure, which is heated to comprise a ceramic component including a substantially gas-tight electrolyte, and wherein the second material(s) of the oxidant side electrode is/are subsequently introduced in the heated first oxidant side electrode material by one or more cycles of a liquefied penetrant method followed by a drying and/or decomposition step.

3. Electrochemical cell according to claim 1 or 2, wherein support is established in one or more layers in the green state by tape casting or by using a slot die system.

4. Electrochemical cell according to claim 1 or 2, wherein the reducing side electrode is established by either tape casting or by using a slot die system or a print process.

5. Electrochemical cell according to claim 1 or 2, wherein at least one of the electrolyte layers is established in the green state by either tape casting or by using a spray process or a print process.

6. Electrochemical cell according to claim 1 or 2, wherein the first electrolyte layer contains doped ZrO_{2 /} YSZ / ScSZ.

7. Electrochemical cell according to claim 1 or 2, wherein the second electrolyte layer contains CeO₂ or doped CeO₂.

8. Electrochemical cell according to claim 7, wherein the CeO₂ is doped or co-doped with Gd, Sm or Tb.

9. Electrochemical cell according to any of the preceding claims, wherein the electrolyte constitutes a graded composition between two materials, preferably doped ZrO₂ and doped CeO₂, whether the grading is created by the forming process or by thermal treatment, i.e. sintering.

10. Electrochemical cell according to claim 1, wherein the oxidant side first material is established in the green state by either tape casting or by using a spray process or a print process.

11. Electrochemical cell according to claim 1, wherein the oxidant side first material consists of doped ZrO₂ / YSZ / ScSZ / CeO₂ doped or co-doped with Gd, Sm or Tb.

12. Electrochemical cell according to any of the preceding claims, wherein an open porous structure is obtained in the oxidant side first material through addition of one or more pore-forming materials or by pre-calcination of one or more fractions of the material.

13. Electrochemical cell according to claim 12, wherein the oxidant side first material has a specific internal surface of at least 5 m² per m² electrolyte area, preferably more than 7 m² and most preferably more than 10 m² per m² electrolyte area.

14. Electrochemical cell according to claim 12, wherein the oxidant side first material has an average pore size of 0.5-5 µm, preferably 0.5-3 µm and most preferably 1-3 µm.

15. Electrochemical cell according to claim 1, wherein the porosity of the oxidant side second layer is open and in the order of 20-70% before the penetration process and 10-50% after the penetration and heat treatment processes.

16. Electrochemical cell according to claim 1, wherein at least two or three layers are produced together by multilayer tape casting or by a slot die process.

17. Electrochemical cell according to claim 1, wherein at least the electrolyte layer(s) and the reducing side electrode are established by methods involving multilayer tape casting or lamination.

18. Electrochemical cell according to claim 1, wherein the assembly of at least two parts of the specified layers is combined with lamination.

19. Electrochemical cell according to claim 12, wherein two or more pore-forming materials are used, one having a typical diameter primarily in the size range from 0.5 to 10 µm, preferably from 0.5 to 5 µm, and another having a typical diameter primarily below 2 µm, preferably around 1 µm.

20. Electrochemical cell according to any of the preceding claims, which is mounted in a stack assembly manifolding two different atmospheres to the two electrodes, and which has an interconnect structure allowing passage of current through the cell.
